# FASCICULE DE BREVET EUROPEEN

(11) **EP 1 519 691 B1**
(45) Date de publication et mention de la délivrance du brevet: **19.12.2007**
(21) Numéro de dépôt: 03759991.7
(22) Date de dépôt: 03.04.2003
(51) Int. Cl.: A61C 1/18, A61C 1/12, A61B 17/32, F16C 1/00

(54) **CONTRE-ANGLE POUR OUTILS ROTATIFS UTILISES EN CHIRURGIE, NOTAMMENT EN CHIRURGIE DENTAIRE**
GEGENWINKEL-HANDSTÜCK FÜR ROTIERENDE OPERATIONSINSTRUMENTE, INSBESONDERE FÜR DIE DENTALCHIRURGIE
CONTRA-ANGLE HANDPIECE FOR ROTARY SURGICAL INSTRUMENTS, IN PARTICULAR IN DENTAL SURGERY

(30) Priorité: 12.06.2002 FR 0207182
(43) Date de publication de la demande: 06.04.2005
(73) Titulaire: Micro-Mega International Manufactures, 25000 Besancon (FR)
(72) Inventeur: PERNOT, Jacques, F-25870 Vieilley (FR)
(74) Mandataire: Poupon, Michel
(86) Numéro de dépôt international: PCT/FR2003/001057
(87) Numéro de publication internationale: WO 2003/105713

(56) Documents cités:
- DE-C- 938 438
- FR-A- 1 243 246
- GB-A- 218 792
- US-A1- 2002 009 690
- US-B1- 6 245 086

## Description

La présente invention concerne un perfectionnement aux appareils d'entraînement, dits « contre-angles », pour outils rotatifs utilisés en chirurgie, notamment en chirurgie dentaire.

De tels appareils dits « contre-angles », sont généralement constitués d'une partie antérieure ou « col » de forme externe cylindro-conique portant la tête dans laquelle est fixé l'instrument dentaire et d'une partie postérieure ou « manche » de forme sensiblement de révolution cylindrique et/ou conique.

Ce manche comprend la connexion mécanique au moteur dentaire d'entraînement, à l'opposé de la connexion au moteur le manche est raccordé au col dont l'axe, sécant avec l'axe du manche, est positionné à environ 20 degrés par rapport à l'axe du manche de manière à former un coude ou contre-angle. Par ailleurs, l'axe de l'instrument dentaire est perpendiculaire à l'axe du col, l'outil dentaire étant orienté, en général en direction de l'axe du manche.

Cet ensemble « manche - col - tête » contient une chaîne cinématique qui a pour but de transmettre la rotation de l'axe du moteur à l'instrument dentaire avec éventuellement une réduction ou une multiplication de la vitesse de rotation.

Compte tenu de cette structure d'angle et de contre-angle ladite chaîne cinématique est elle aussi décomposée en trois parties : une première disposée dans le manche, une seconde dans le col et une troisième dans la tête. Cette troisième partie étant de plus équipée de moyens de fixation amovible ou non de l'instrument dentaire pour son entraînement en rotation et son arrêt en translation suivant l'axe de la tête.

De manière générale, la transmission du mouvement de rotation entre ces différentes parties se fait par l'intermédiaire d'engrenages à axes non parallèles dont le positionnement a une grande importance d'une part en terme de durée de vie du contre-angle (un mauvais positionnement se traduisant par une usure prématurée des pignons) et d'autre part en terme de confort pour le patient et le chirurgien dentiste (un mauvais positionnement se traduisant aussi par un niveau de bruit important) et ce en considérant que les vitesses de rotation sont couramment de 40 000 tr/mn.

Ainsi, le positionnement de chaque partie de la chaîne cinématique est en général fait de telle sorte que chacune des parties est fixée dans les parties respectives du contre-angle ( manche - col - tête) de façon à faire corps avec elle et constituant ainsi un sous-ensemble indépendant.

Le document US-B1-6,245,086 décrit une connexion dans laquelle les deux pièces portant respectivement l'arbre du manche et celui du col d'un contre-angle sont chacune montées coulissantes le long de leurs axes respectifs et sont maintenues chacune sur une butée agencée sur le fourreau des éléments dans lesquels elles coulissent par deux ressorts indépendants. La liaison entre les deux arbres comprend un ressort entre la pièce portant l'arbre du manche et une pièce de connexion montée en rotation dans le col, ladite pièce de connexion étant reliée à la pièce portant l'arbre du col via un cardan.

Bien que de tels appareils donnent satisfaction, il s'avère que les moyens de fixation des organes de la chaîne cinématique sont complexes et par voie de conséquence la réparation par échange des pièces est quasiment impossible par des non-spécialistes.

Le but de l'invention est de proposer un perfectionnement à de tels appareils qui permet de résoudre tout ou partie des inconvénients précités en proposant une solution économique d'assemblage de la chaîne cinématique, permettant aussi, le cas échéant, de rendre la réparation par échange de pièces accessible à des non-spécialistes.

A cet effet, la présente invention a pour objet un appareil d'entraînement, dit « contre-angle », pour outils rotatifs utilisés en chirurgie, notamment en chirurgie dentaire, composé d'un manche, d'un col et d'une tête dans laquelle se fixe l'outil ; chacune des parties de ce contre-angle recevant en son intérieur un arbre d'entraînement désigné respectivement arbre menant pour le manche et arbre mené pour le col, qui sont reliés l'un à l'autre par un train d'engrenage, caractérisé en ce que les arbres menant et mené de l'appareil sont montés glissants dans leurs corps respectifs formant fourreau et maintenus en appui sur une butée agencée sur leur fourreau correspondant par un unique élément élastique logé dans le coude de liaison du manche avec le col.

Selon une caractéristique avantageuse de la présente invention, l'élément élastique est constitué d'un ressort de compression monté coaxialement au train d'engrenage dont l'une des extrémités est en appui sur l'arbre menant et l'autre extrémité sur l'arbre mené.

Selon une autre caractéristique avantageuse de la présente invention, le manche de l'appareil est en outre constitué d'un corps cylindrique sur lequel est agencée une pièce de raccordement amovible et interchangeable assurant la connexion avec différents standards de raccordement au moteur d'entraînement.

Toujours selon l'invention, la tête de l'appareil est munie d'un système de fixation rapide de l'outil.

Selon un mode de réalisation de invention, ce système de fixation rapide de l'outil à main est constitué d'une pince réalisée en matière plastique élastique dont son extrémité libre est apte à s'ouvrir en forme de corolle par l'intermédiaire de rainures longitudinales réalisées sur une majeure partie de son corps et d'un évasement tronconique à sa périphérie extérieure destiné à coopérer avec un fourreau cylindrique monté à l'intérieur du corps de la tête tandis que son extrémité opposée est fixée par l'intermédiaire d'un filetage à un bouton pression mobile axialement et rappelé à sa position de repos par un ressort assurant ainsi lors du retour du bouton pression, le serrage de la pince et par voie de conséquence la fixation de l'outil et en ce que ledit ressort prend appui sur le fourreau cylindrique tournant réalisé en matière plastique.

Selon une caractéristique avantageuse, le fourreau cylindrique du système de fixation rapide comporte un organe d'entraînement qui engrènent avec un maneton solidaire de l'arbre mené assurant la transmission du mouvement de rotation du moteur en un mouvement alternatif de rotation de l'outil.

Selon une autre caractéristique avantageuse, le corps du col et celui du manche sont réalisés en matière plastique et sont reliés l'un à l'autre par un moyen de fixation démontable du type filetage.

Selon une variante de réalisation, le corps du col et du manche sont reliés l'un à l'autre par soudage.

Les caractéristiques de l'invention mentionnées ci-dessus, ainsi que d'autres, apparaîtront plus clairement à la lecture de la description suivante d'un exemple de réalisation, en se référant aux dessins annexés sur lesquels :
- la figure 1 est une vue en coupe longitudinale d'un contre-angle selon la présente invention, et
- la figure 2 est une vue similaire à la figure 1 illustrant une variante de réalisation.

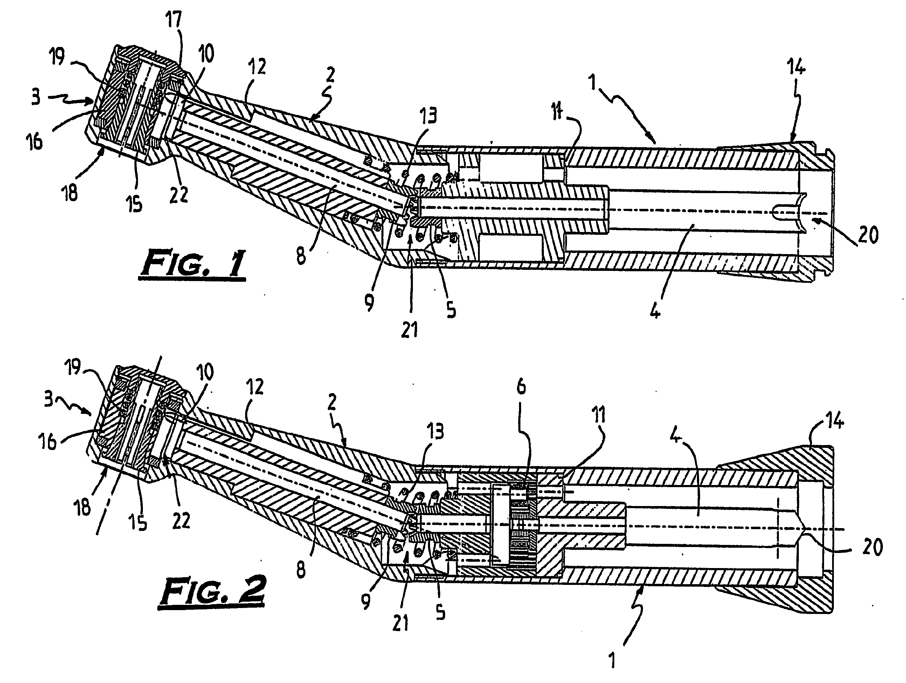

On a représenté sur les figures 1 et 2, un contre-angle dentaire composé d'un manche 1, d'un col 2 et d'une tête 3 dans laquelle se fixe l'outil ; chacune des parties de ce contre-angle recevant en son intérieur un ou plusieurs éléments de la chaîne cinématique de transmission du mouvement de rotation d'un moteur jusqu'à l'outil ainsi entraîné.

Le manche 1 reçoit par exemple un ensemble qui comprend un arbre entraîneur ou arbre menant 4 destiné à être en prise avec l'axe moteur (non représenté) et à l'autre extrémité un pignon 5 menant qui transmet la rotation à l'élément cinématique du col 2.

On constatera qu'entre le pignon 5 et l'axe moteur peuvent venir prendre place des éléments de réduction ou de multiplication 6 de la vitesse, comme visible à la figure 2.

Le col 2 reçoit quant à lui un axe de transmission ou axe mené 8 qui est muni à l'une de ses extrémités d'un pignon 9 mené engrainant avec le pignon menant 5 de l'arbre d'entraînement 4 du manche 1 et à l'autre extrémité un organe de transmission de mouvement au module de tête 3, du type maneton 10 (de préférence) ou pignon ou encore roue de friction.

Selon la présente invention, les arbres menant 4 et mené 8 de l'appareil sont montés glissants dans leurs corps respectifs formant fourreau et maintenus en appui sur une butée 11, 12 agencée sur leur fourreau correspondant par un unique élément élastique 13 logé dans le coude de liaison du manche 1 avec le col 2. Un tel élément élastique 13 permettant avantageusement de garantir le bon positionnement des organes de la transmission de la chaîne cinématique.

On notera que le corps du col 2 et celui du manche 1 sont réalisés en matière plastique et reliés l'un à l'autre par un moyen de fixation démontable du type filetage ou selon une variante de réalisation sont soudés l'un à l'autre.

L'élément élastique 13 est constitué par exemple d'un ressort à compression monté coaxialement aux pignons menant 5 et mené 9 formant le train d'engrènement de l'appareil dont l'une de ses extrémités est en appui sur l'arbre menant 4 et l'autre extrémité sur l'arbre mené 8, comme illustré sur les figures.

Le manche 1 de l'appareil est en outre avantageusement constitué d'un corps cylindrique sur lequel est agencée une pièce de raccordement amovible et interchangeable 14 assurant la connexion avec différents standards de raccordement au moteur d'entraînement (non représenté), comme visible sur les figures.

La tête 3 de l'appareil est en outre munie d'un système de fixation rapide de l'outil.

Ce système de fixation rapide est constitué d'une pince 15 réalisée en matière plastique élastique dont son extrémité libre est apte à s'ouvrir en forme de corolle par l'intermédiaire de rainures longitudinales réalisées sur une majeure partie de son corps et d'un évasement tronconique à sa périphérie extérieure destiné à coopérer avec un fourreau cylindrique 16 monté à l'intérieur du corps de la tête 3 tandis que son extrémité opposée est fixée par l'intermédiaire d'un filetage à un bouton pression 17 mobile axialement et rappelé à sa position de repos par un ressort 19 assurant ainsi lors, du retour du bouton pression, le serrage de la pince et par voie de conséquence la fixation de l'outil introduit par une ouverture 18 réalisée sur la tête à l'opposée du bouton pression 17. Ledit ressort 19 prend appui sur le fourreau cylindrique 16 tournant réalisé en matière plastique.

Ce fourreau cylindrique 16 comporte en outre un organe d'entraînement qui engrènent avec le maneton d'entraînement 10 solidaire de l'arbre mené 8 assurant ainsi la transmission du mouvement de rotation du moteur en un mouvement alternatif de rotation de l'outil.

Le fonctionnement de l'appareil d'entraînement dit **«** contre-angle », pour outils rotatifs utilisés en chirurgie, notamment en chirurgie dentaire ressort déjà de la description qui en a été faite ci-dessus et va être maintenant expliqué.

L'appareil ou contre-angle est raccordé à un moteur d'entraînement par la pièce de raccord 14 adéquate, un premier train 20 assure l'entraînement de l'arbre menant 4 du manche qui entraîne, par un second train 21, l'arbre mené du col et enfin par un troisième train 22 l'outil rotatif solidaire de la pince montée dans la tête de l'appareil.

L'élément élastique 13 disposé coaxialement au second train d'engrenage 21 assure le bon positionnement contre chacune des butées 11 et 12 des arbres mené 4 et menant 8 de l'appareil. Ces butées 11 et 12 sont montées en opposition sur le corps du manche 1 et du col 2 de sorte que le montage des arbres dans leurs corps respectifs ne puisse se faire qu'au niveau du coude de l'appareil à savoir le raccord manche/col.

On comprend à la lecture de la description ci-dessus que l'appareil selon la présente invention est relativement simple à réaliser et permet une transmission par des éléments de conception économique et d'assemblage simplifié par rapport aux appareils de contre-angle classiques. En outre, une telle simplification assure la possibilité, le cas échéant, du remplacement des pièces usées ou défectueuses par leur échange sans nécessiter le recours à des spécialistes.

Bien que l'invention ait été décrite en liaison avec deux modes de réalisation particuliers elle comprend tous les équivalents techniques des moyens décrits.

## Revendications

1. Appareil d'entraînement, dits « contre-angle », pour outils rotatifs utilisés en chirurgie, notamment en chirurgie dentaire, composé d'un manche (1), d'un col (2) et d'une tête (3) dans laquelle se fixe l'outil; chacune des parties de ce contre-angle recevant en son intérieur un arbre d'entraînement désigné respectivement arbre menant (4) pour le manche (1) et arbre mené (8) pour le col (2), qui sont reliés l'un à l'autre par un train d'engrenage (21), les arbres menant (4) et mené (8) de l'appareil étant montés glissants dans leurs corps respectifs formant fourreau et maintenus en appui sur une butée (11, 12) agencée sur leur fourreau correspondant par un unique élément élastique (13) logé dans le coude de liaison du manche (1) avec le col (2).

2. Appareil d'entraînement selon la revendication 1, **caractérisé en ce que** l'élément élastique (13) est constitué d'un ressort de compression monté coaxialement au train d'engrenage (21) dont l'une des extrémités est en appui sur l'arbre menant (4) et l'autre extrémité sur l'arbre mené (8).

3. Appareil d'entraînement selon la revendication 1 ou 2, **caractérisé en ce que** le manche (1) de l'appareil est en outre constitué d'un corps cylindrique sur lequel est agencée une pièce de raccordement amovible et interchangeable (14) assurant la connexion avec différents standards de raccordement au moteur d'entraînement.

4. Appareil d'entraînement selon l'une quelconque des revendications précédentes, **caractérisé en ce que** la tête (3) de l'appareil est munie d'un système de fixation rapide de l'outil.

5. Appareil d'entraînement selon la revendication 4, **caractérisé en ce que** le système de fixation rapide de l'outil à main est constitué d'une pince (15) réalisée en matière plastique élastique dont son extrémité libre est apte à s'ouvrir en forme de corolle par l'intermédiaire de rainures longitudinales réalisées sur une majeure partie de son corps et d'un évasement tronconique à sa périphérie extérieure destiné à coopérer avec un fourreau cylindrique (16) monté à l'intérieur du corps de la tête tandis que son extrémité opposée est fixée par l'intermédiaire d'un filetage à un bouton pression (17) mobile axialement et rappelé à sa position de repos par un ressort (19) assurant ainsi lors, du retour du bouton pression, le serrage de la pince et par voie de conséquence la fixation de l'outil et **en ce que** ledit ressort (19) prend appui sur le fourreau cylindrique (16) tournant réalisé en matière plastique.

6. Appareil d'entraînement selon la revendication 5, **caractérisé en ce que** le fourreau cylindrique (16) du système de fixation rapide comporte un organe d'entraînement qui engrènent avec un maneton (10) solidaire de l'arbre mené (8) assurant la transmission du mouvement de rotation du moteur en un mouvement alternatif de rotation de l'outil.

7. Appareil d'entraînement selon l'une quelconque des revendications précédentes, **caractérisé en ce que** le corps du col (2) et celui du manche (1) sont réalisés en matière plastique.

8. Appareil d'entraînement selon la revendication 7, **caractérisé en ce que** le corps du col (2) et du manche (1) sont reliés l'un à l'autre par un moyen de fixation démontable du type filetage.

9. Appareil d'entraînement selon la revendication 7, **caractérisé en ce que** le corps du col (2) et du manche (1) sont reliés l'un à l'autre par soudage.

## Claims

1. So-called "contra-angle" drive device for rotary tools used in surgery, particularly in dental surgery, comprising a handle (1), a neck (2) and a head (3) in which the tool is fastened, each of the parts of this contra-angle receiving, inside, a drive shaft designated input shaft (4) for the handle (1) and output shaft (8) for the neck (2), respectively, which are connected to each other by a gear train (21), the device's input (4) and output (8) shafts being fitted so as to slide in their respective bodies forming sheaths and kept supported on stops (11 and 12) arranged on their corresponding sheaths by a single elastic element (13) housed in the handle (1) and neck (2) connecting bend.

2. Drive device according to Claim 1, **characterized in that** the elastic element (13) comprises a compression spring fitted coaxially with the gear train (21), one of the ends of which is supported on the input shaft (4) and the other end of which is supported on the output shaft (8).

3. Drive device according to Claim 1 or 2, **characterized in that** the device handle (1) also comprises a cylindrical body on which a detachable, interchangeable coupling piece (14) is arranged, ensuring connection with various different standards of coupling to the drive motor.

4. Drive device according to any one of the preceding claims, **characterized in that** the device head (3) is equipped with a quick tool fastening system.

5. Drive device according to Claim 4, **characterized in that** the quick hand tool fastening system comprises a holder (15) made of elastic plastic, the free end of which is suitable for opening in the shape of a corolla by means of longitudinal slots formed in the greater part of its body and by means of a truncated conical flare at its external periphery, intended to co-operate with a cylindrical sheath (16) fitted inside the head's body, whilst its opposite end is fastened by means of a screw thread to a push-button (17) which is axially movable and returned to its idle position by a spring (19) thus ensuring, on the return of the push-button, the tightening of the holder and, as a result, the fastening of the tool, and **in that** the said spring (19) is supported on the turning cylindrical sheath (16) made of plastic.

6. Drive device according to Claim 5, **characterized in that** the cylindrical sheath (16) of the quick fastening system comprises a drive element which engages with a crank pin (10) secured to the output shaft (8) ensuring transmission of the motor's rotary motion to alternative rotary motion of the tool.

7. Drive device according to any one of the preceding claims, **characterized in that** the neck (2) body and handle (1) body are made of plastic.

8. Drive device according to Claim 7, **characterized in that** the neck (2) body and handle (1) body are connected to each other by a threaded type of detachable fastening means.

9. Drive device according to Claim 7, **characterized in that** the neck (2) body and handle (1) body are connected to each other by welding.

## Patentansprüche

1. Antriebsgerät, "Winkelstück" genannt, für in der Chirurgie, insbesondere der Dentalchirurgie, verwendete Drehwerkzeuge, bestehend aus einem Griff (1), einem Hals (2) und einem Kopf (3), in dem das Werkzeug befestigt wird; wobei jeder Teil dieses Winkelstücks in seinem Innern eine Antriebswelle aufnimmt, die jeweils für den Griff (1) als treibende Welle (4) und für den Hals (2) als getriebene Welle (8) bezeichnet wird, die über ein Zahnräderwerk (21) mit einander verbunden sind, wobei die treibende Welle (4) und die getriebene Welle (8) des Geräts in ihren jeweiligen Körpern, die eine Hülse bilden, gleitend montiert sind und auf einem Anschlag (11, 12) abstützend gehalten werden, der auf ihrer entsprechenden Hülse über ein einziges elastisches Element (13), das im Verbindungswinkel des Griffs (1) mit dem Hals (2) aufgenommen ist, angeordnet ist.

2. Antriebsgerät nach Anspruch 1, **dadurch gekennzeichnet, dass** das elastische Element (13) aus einer Druckfeder besteht, die koaxial zum Zahnräderwerk (21) montiert ist und deren eines Ende sich auf der treibenden Welle (4) und deren anderes Ende sich auf der getriebenen Welle (8) abstützt.

3. Antriebsgerät nach Anspruch 1 oder 2, **dadurch gekennzeichnet, dass** der Griff (1) des Geräts zudem aus einem zylindrischen Körper besteht, auf dem ein abnehmbares und austauschbares Verbindungsstück (14) angeordnet ist, das den Anschluss mit verschiedenen Verbindungsstandards an den Antriebsmotor sicherstellt.

4. Antriebsgerät nach einem der vorhergehenden Ansprüche, **dadurch gekennzeichnet, dass** der Kopf (3) des Geräts mit einem System zum schnellen Befestigen des Werkzeugs versehen ist.

5. Antriebsgerät nach Anspruch 4, **dadurch gekennzeichnet, dass** das System zur schnellen Befestigung des Handwerkzeugs aus einer Klemme (15) besteht, die aus elastischem Kunststoffmaterial ausgebildet ist und deren freies Ende sich blütenförmig öffnen kann, und zwar über längsseitige Rillen, die auf dem größten Teil ihres Körpers ausgebildet sind, und über eine kegelstumpfartige Erweiterung auf ihrem Außenumfang, die dazu gedacht ist, mit einer zylindrischen Hülse (16) zusammenzuwirken, die innerhalb des Körpers der Kopfes montiert ist, während ihr entgegengesetztes Ende über ein Gewinde an einem Druckknopf (17) befestigt ist, der axial beweglich ist und durch eine Feder (19) in seine Ruhestellung zurückgestellt wird, wodurch bei der Rückkehr des Druckknopfes das Festspannen der Klemme und folglich die Befestigung des Werkzeugs sichergestellt wird, und dass die Feder (19) sich auf der drehbaren zylindrischen Hülse (16), die aus Kunststoff ausgebildet ist, abstützt.

6. Antriebsgerät nach Anspruch 5, **dadurch gekennzeichnet, dass** die zylindrische Hülse (16) des Schnellbefestigungssystems ein Antriebsorgan umfasst, das in einen Kurbelzapfen (10) eingreift, der mit der getriebenen Welle (8) einstückig ist, wodurch die Übertragung der Drehbewegung des Motors in eine Umkehrdrehbewegung des Werkzeugs sichergestellt wird.

7. Antriebsgerät nach einem der vorhergehenden Ansprüche, **dadurch gekennzeichnet, dass** die Körper des Halses (2) und der des Griffes (1) aus Kunststoff ausgebildet sind.

8. Antriebsgerät nach Anspruch 7, **dadurch gekennzeichnet, dass** die Körper des Halses (2) und des Griffes (1) über ein gewindeartiges, abnehmbares Befestigungsmittel miteinander verbunden sind.

9. Antriebsgerät nach Anspruch 7, **dadurch gekennzeichnet, dass** die Körper des Halses (2) und des Griffes (1) durch Verschweißen miteinander verbunden sind.
